# EUROPEAN PATENT APPLICATION

(11) **EP 1 462 973 A1**
(43) Date of publication of application: **29.09.2004**
(21) Application number: 04006170.7
(22) Date of filing: 16.03.2004
(51) Int. Cl.: G06F 17/60

(54) **A computer system and a process for computer-implemented management of one or more target agreements**

(30) Priority: 24.03.2003 WO PCT/EP03/03044
(71) Applicant: SAP Aktiengesellschaft, 69190 Walldorf (DE)
(72) Inventor: Westendorf, Frank, 76698 Ubstadt-Weiher (DE); Ihle, Michael, 76694 Forst (DE); Wiesner, Lars, 69120 Heidelberg (DE)
(74) Representative: Hössle Kudlek & Partner

(57) **Abstract**

A process and system for the computer-implemented management of one or more target agreements (72) with one or more parties to the agreement by means of a target agreement computer system (10) are provided, in which the target agreements (72) each comprise at least one performance target, a performance target being a measurable value to be achieved within a given or predeterminable time span, where at the start of the time span an individual target agreement is defined and at the end of the time span the degree of achievement of the individual prescribed values and hence of the targets is automatically determined and an incentive payment dependent thereon is calculated and distributed, comprising a calculation module in which the definition of the assessment scale for determining the degree of achievement of the values is laid down, and a remuneration module in which the incentive payment belonging to an assessment resulting from the assessment module is laid down, further comprising an interface (60) to a performance objective management computer system (50, 52, 54) in which the target values for the performance target are managed, target values forming the basis for a comparison of target and actual values to be carried out in the target agreement computer system (10) being imported via the interface (60).

## Description

### Field of the invention

The present invention relates to a process for the computer-implemented management of one or more target agreements with one or more parties to the agreement and a target agreement computer system for carrying out such a process. The invention further relates to a computer program product with a computer-readable medium and a computer program stored on the computer-readable medium with program coding means which are suitable for carrying out such a process when the computer program is run on a computer.

### Description of the Related Art

Managing employee compensation plans has traditionally been done manually on spreadsheets or in-house developed applications. For a large organization, compensation plans are typically complex and involve rewards like commissions, bonuses, splits, accelerators, draws, caps, and are notoriously difficult to maintain and manage accurately. Target agreements (also called objective agreements) play an important role in modern staff management in conjunction with assessment systems. As a rule, target agreements are used within the framework of a consultation, promotion or annual interview, in which a senior person works together with an employee or a staffer (i.e. a member of staff) or colleague to set qualitative and quantitative goals which will be looked at on a one-off basis or at regular intervals (generally at yearly or half-yearly intervals, but according to recent experience at more frequent intervals) to check the extent to which the goals have been achieved. In the case of performance-related pay, an incentive payment will be made depending on the targets achieved. Obviously, this principle can also be applied to agreements between a client and a contractor, e.g. with a contractor acting on the basis of a consultancy agreement or the like.

There are already computer programs in existence for the computer-aided management and calculation of commission on the basis of input target amounts in accordance with an agreement and input actual amounts which are input after examining the degree to which targets have been met. Thus, the known computer programs are solutions in which a number of target agreements are run separately, independently of one another. Or, in other words: the known systems merely automatically perform the steps which had previously been done on paper by the two parties involved in the target agreement (generally the management and employees). However, there exists a need for a more accurate target agreement system in view of complex plans to be kept, which in the prior art results in organizations and enterprises wasting money by overpaying their staff as the existing systems are not able to keep accurate track of the complex plans underlying the target agreements.

### Summary of the Invention

In contrast thereto, the invention proposes a process for the computer-implemented management of target agreements with the features of claim 1 and a target agreement computer system with the features of claim 13.

Accordingly, an interface is provided through which target values are imported for the purpose of a comparison of target/actual values which is to be carried out in the target agreement computer system. These target values are imported, for example, from a performance target management computer system which manages central data and general and individual target values within the scope of a modern personnel management computer system (Human Capital Management - HCM) used for so-called Management By Objectives (MBO) or from a Corporate Performance Management System in the field of strategic management. The invention thus makes it possible to undertake a complex comparison, which is virtually impossible in larger bodies or institutions, between individual agreements and central management decisions with which the outline conditions for the MBO forming the basis for the target agreements are defined and amended.

This in turn ensures that the individual target agreements and the basis for calculating incentive payments or commissions are right up to date. Tying the functions anchored in the Human Capital Management framework to the administration of employee data thus leads to a complex performance-dependent calculation of remuneration in the target agreement system. It is easier to measure/monitor the target agreements of the company and transparency is guaranteed as the party to the agreement can inspect them.

The invention thus provides a system that allows timely accurate collection and processing of relevant data in a complex target agreement environment which results in precise and fast commission and bonus payments and allows for back-analysis (history of achievements), interim simulations and forecast (extrapolation of current status), thus leading to an improved motivation of members of staff. The system according to the invention adapts to changes in calculation rules which occur often and rapidly when changes are made in an organizational structure due to changing business conditions. Thus, incentives and commissions can be better processed in a modern enterprise which has to adjust to market requirements at a heightened pace.

According to an advantageous embodiment of the invention the interface is constructed by means of an object type category connection or link, making it easier to connect to different systems at the interface.

A suitable object type category preferably comprises obtaining or collecting a target value, determining the actual value, displaying the target agreements, modifying the target agreements and obtaining or collecting the remuneration base value.

Obtaining the target value involves obtaining and providing the target values of the target agreements based on a specific time span and a specific commissions contract (target agreement).

Obtaining the actual value involves obtaining and providing (making available) the actual values achieved in connection with a target agreement based on or related to a specific time span or period and a specific commissions contract.

Displaying the target agreements involves displaying the target agreements related to a specific time period in the commissions contract.

Modifying the target agreements involves modifying the target agreements related to a specific time period in the commissions contract.

Obtaining the remuneration base value involves inputting the remuneration base value, which can vary for different target agreements, into the calculation module.

According to the invention, standard target agreements are laid down in the target agreement system, on the basis of which individual target agreements can be produced. The personnel management system in turn contains electronic forms, so-called templates, on the basis of which employee-specific documents are generated. When a target agreement is being generated with a specific employee (= party to the agreement) an allocation is made in the form of a link between the employee-specific document of the HCM or MBO (MBO document) and the target agreement. According to the invention the link is made on the basis of an object type link or a so-called logical service. The linking according to the invention of the personnel administration systems and operative systems, which are normally separated, thus makes it possible to maintain (or attend to) performance targets (or performance objectives) by means of data which will in any case be input into the MBO system (staff management system). Advantageously, the standard target agreement is maintained on a periodic basis.

Alternatively or cumulatively, the performance target data can be maintained or attended to (i.e. updated, corrected, adapted etc.) via a dialogue device of the target agreement system, the input data affecting the MBO documents as a result of the linking of MBO documents with a target agreement or the commission agreement on which it is based. An association between an MBO document and a commission agreement is permissible precisely when the MBO document is based on a template of the MBO system which is associated with a standard target agreement of the target agreement system, which is in turn part of the standard commission contract which forms the basis for the specific commission contract. In a particularly advantageous embodiment of the invention the templates of the MBO system with the standard agreements of the target agreement system are therefore connected to one another by means of an object type category link or a logical service.

The invention also covers a computer program with program coding means which are suitable for carrying out a process according to the invention as described above when the computer program is run on a computer. The computer program itself as well as stored on a computer-readable medium is claimed.

Further features and embodiments of the invention will become apparent from the description and the accompanying drawings.

It will be understood that the features mentioned above and those described hereinafter can be used not only in the combination specified but can also be combined in other constellations or used on their own, without departing from the scope and the spirit of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the Drawings

In the drawings,
Figure 1 is a schematic view of a target agreement computer system according to the invention;
Figure 2 is a schematic block diagram representation of the system of the invention;
Figure 3 shows a more detailed block diagram of a target agreement system according to the invention; and
Figure 4 illustrates the methods of an object type class used in the present invention.

### Detailed Description

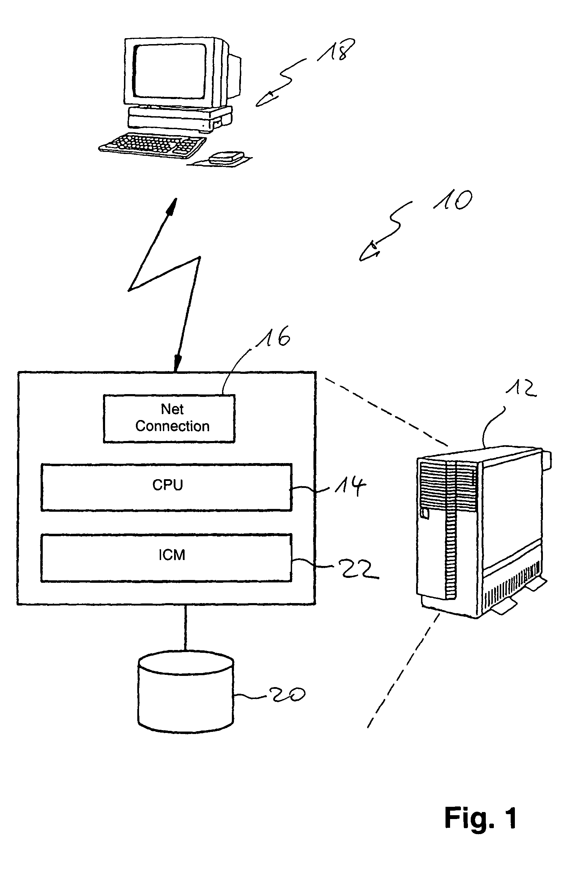

Figure 1 shows a schematic block diagram representation of a target agreement system 10 according to the present invention. Computer system 10 comprises a server 12 with a central processing unit CPU 14, a network connection 16 for connection with at least one input/output means 18, at least one database means 20 containing target agreement and commission data relating to target agreement creation between two or more agreement parties. The target agreement system 10 of the invention further comprises an Incentive and Commissions Management (ICM) system 22. The system as shown in Figure 1 is used in the management of one or more target agreements (72) with one or more parties to the agreement, the target agreements (72) each comprising at least one performance target. A performance target is a measurable prescribed or set value to be achieved within a given or predeterminable time span or period. The value is part of the agreement and might be alterable during the agreement life time. At the start of the time span, an individual target agreement is defined and at the end of the time span the degree of achievement of the individual prescribed values and hence of the targets is determined (automatically or via manual input) and an incentive payment dependent thereon is calculated and distributed.

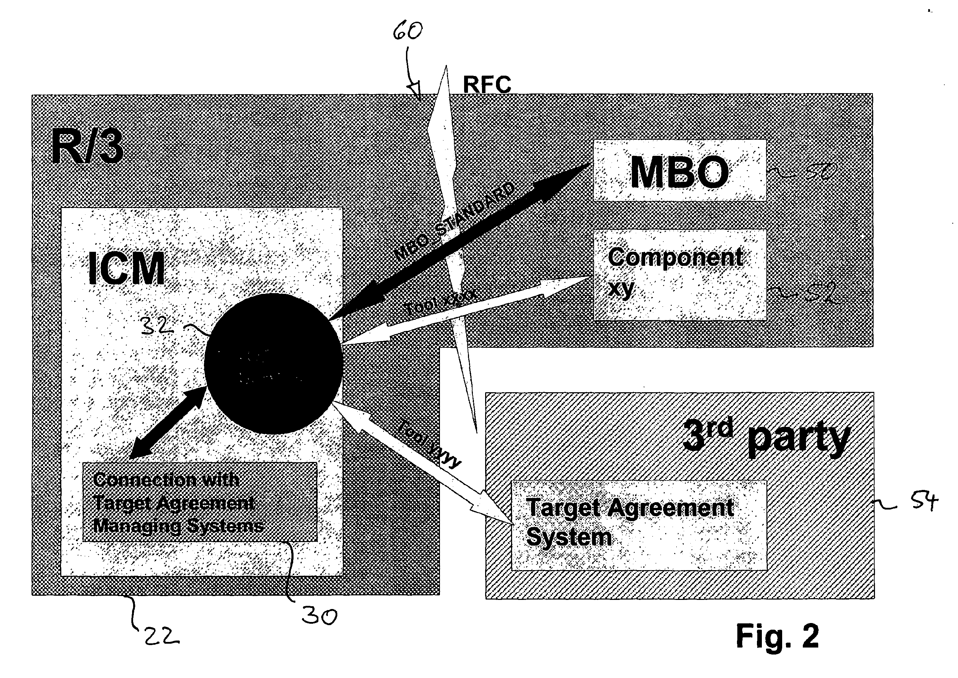

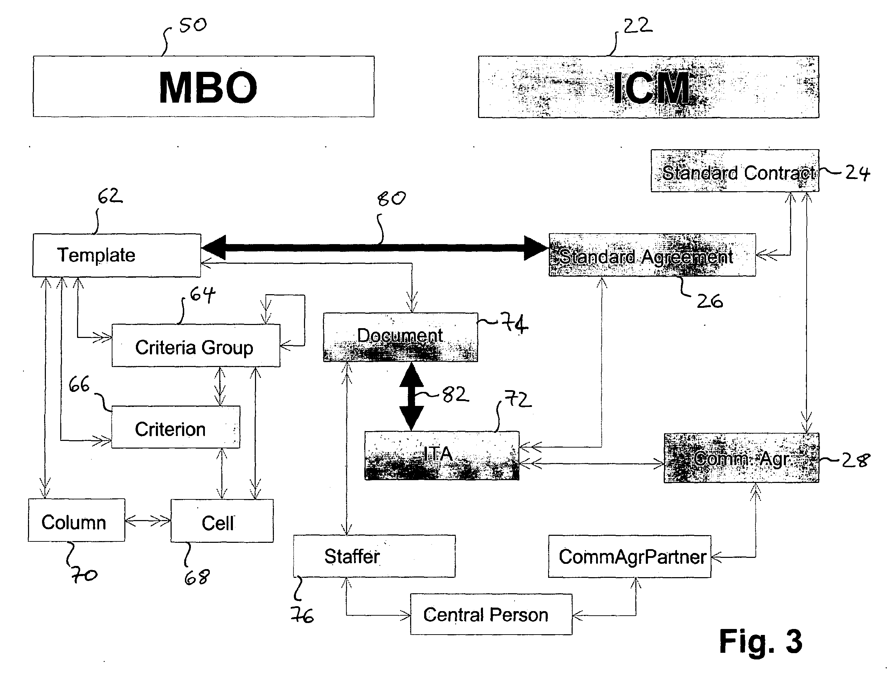

Referring now to Figures 2 and 3, the target agreement system of the invention is described in more detail. The ICM system 22, which is advantageously embedded in a SAP R/3 environment, provides for a periodical determination of result achievements of a contracting person (staffer, employee, colleague, contributor, contractor) and subsequent incentive payment depending on the targets and results achieved. Therefor, the ICM system 22 disposes of data relating to standard contracts 24, standard agreements 26 and (individual) commission agreements 28 by comprising a target agreement managing system 30 connected to database 20. In particular, the ICM system 22 comprises a calculation module (not shown) in which the definition of the assessment scale for determining the degree of achievement of the prescribed values is laid down, and a remuneration module (not shown) in which the incentive payment for an assessment resulting from the assessment module is laid down.

An ICM system generally consists of three core functions, i.e. compensation management, reporting and modelling, and finds application for example in the management of incentive plans of sales staff working for large companies. However, there is a need for an automated system according to the invention which extends beyond the possibilities of known ICM systems into wider business areas to reward staff in other departments as well as the extended business of channel and distribution partners.

According to the invention, the target agreement managing system 30 is linked to a performance objective management system providing access to administrative data, e.g. personalized target agreements. Possible performance objective management systems are depicted on the right hand side of Figure 2. They can comprise systems that are also embedded in the SAP R/3 environment like a Management By Objectives (MBO) system 50 or any other suitable component 52, or any third party system 54 that is outside of the SAP environment. Linkage between the ICM system 22 and the system in which the target values for the performance target are managed is achieved via an interface and RFC (remote function call) capable functional modules such as BADIs (Business Add-Ins) and BAPIs (Business Application Programming Interfaces) (schematically illustrated at 60). Appropriate tools can be used to achieve the linkage, such as the MBO standard tool or any other tool designed for the relevant system component.

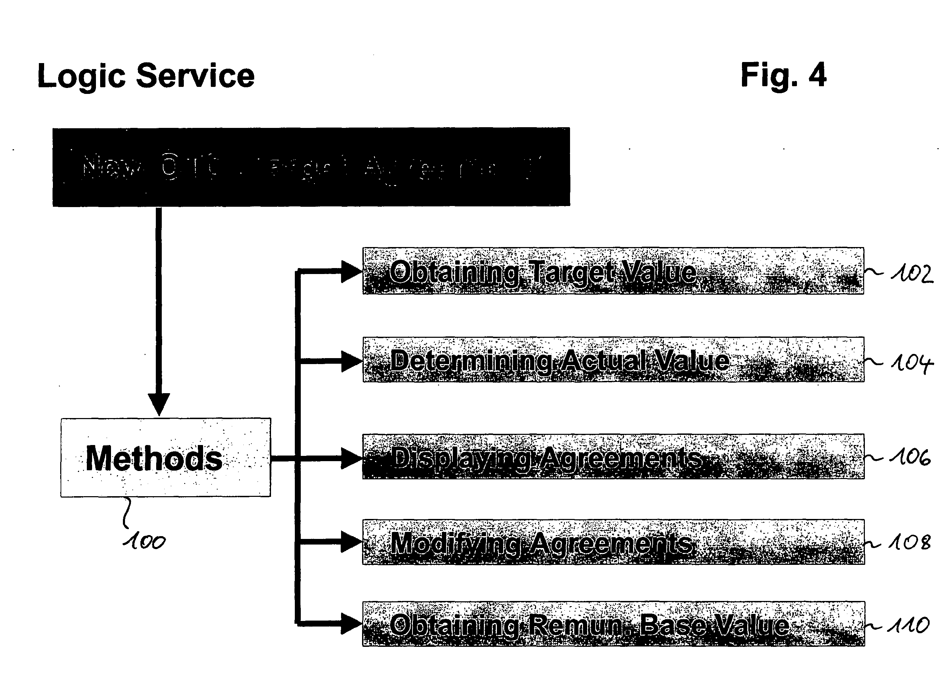

The connection between the target agreement managing system 30 and the interface 60 is advantageously provided by so-called logic services 32, which is a service tool included in the SAP ICM system (logic services may be described as "soft" interfaces). For this, a new object type class has to be generated in the logic services, comprising the methods 100 depicted in Figure 4, namely obtaining a target value 102, determining the actual value 104, displaying the target agreements 106, modifying the target agreements 108 and obtaining the remuneration base value 110.

In 102, the target values of the target agreements based on a specific time span and a specific commissions contract (target agreement) are obtained and provided. In particular, the target values are obtained or retrieved from the performance target management system, i.e. the MBO system. In 104, the actual values achieved in connection with a target agreement based on a specific time span and a specific commissions contract are obtained and provided. The actual values can also be obtained from the performance target management system, but they could also be obtained from different systems or sources. In 106, the target agreements in relation to a specific time span in the commissions contract are displayed. In 108, the target agreements in relation to a specific time span in the commissions contract are modified. Finally, in 110, the remuneration base value, which can vary for different target agreements, are input into the calculation module of the ICM system 22.

Referring again to Figure 3, the system of the invention operates as follows. As already pointed out above, the ICM system 22 comprises a standard contract 24, a standard (target) agreement 26 and an individual commission agreement 28. The MBO system 50 comprises a template 62, a criteria group 64, a criterion 66, a cell 68 and a column 70. The cell 68 contains the individual data and the column 70 contains the targets.

In Figure 3, the thin line arrows between the block diagram boxes are 1:n arrows, i.e. a single arrowhead stands for an unequivocal unambiguous relation, a double arrowhead stands for an equivocal ambiguous relation. For example, the standard contract is the basis for a plurality of standard target agreements (double arrowhead pointing from 24 to 26) but each of the plurality of standard target agreements is based on one and only one standard contract (single arrowhead pointing from 26 to 24). This means that there is a 1:n relation between standard contract and standard target agreement. The same applies to the relation between standard contract and commission agreement 28.

On the basis of a standard target agreement 26 and a commission agreement 28, one or more individual target agreements (ITA) 72 can be generated. Again, there is a 1:n relation between standard target agreement 26 and commission agreement 28 on the one hand and the generated agreements 72 on the other hand.

On the basis of the template 62 of the MBO system 50, an individual target agreement document 74 can be generated and assigned to an employee. Again, as can be seen from Figure 3, there is a 1:n relation between template 62 and document 74.

Agreement ITA 72 and document 74 are newly generated documents. They contain the criteria groups and criteria that are already set up in the template.

It shall be appreciated that up to this stage, there is no interaction between the ICM system 22 depicted at the right side of Figure 3 and the MBO system 50 depicted at the left side of Figure 3.

Now, according to the invention, there is provided an interface between the two systems, notably a logic service interface as described above, which is illustrated in Figure 3 by means of thick lined double arrows 80, 82. The interface connection according to the invention provides an interaction and data flow between the standard agreement generation system and the individual data-containing system. In particular, there is a link between the standard agreement and the template so that exactly one MBO template is assigned to one ICM standard agreement. This is achieved by entering the name of a relevant MBO template in the customizing database upon generation of a standard agreement form. Any time a change occurs, the customizing data can be maintained within a short time thus enabling a user to change relations and assignments between a plurality of documents by merely adapting the assignment between higher order documents. As is appreciated, one template which is defined for use with the ICM system can be used for a plurality of standard target agreements.

Referring still to Figure 3, there can be several documents 74 assigned to one "staffer" (employee etc.) 76. Each document contains the criteria and criteria groups already embodied in the template. All changes to performance targets will be made exclusively in the MBO system which are then again available to the ICM system thus rendering the whole process of updating and adapting complex system data less cumbersome. Further, current (actual) data on achievements regarding performance targets entered in the MBO system is readily available for calculation of remuneration and commission payments in the ICM system.

A given MBO document 74 can be assigned to a given commission agreement on condition that the given document is based on a template which is assigned or linked to a standard target agreement which forms part of the standard commission contract being the basis for the given commission agreement. This results in an assignment of one or more MBO documents to a given commission agreement.

## Claims

1. A process for the computer-implemented management of one or more target agreements (72) with one or more parties to the agreement by means of a target agreement computer system (10), in which the target agreements (72) each comprise at least one performance target, a performance target being a measurable value to be achieved within a given or predeterminable time span, where at the start of the time span an individual target agreement is defined and at the end of the time span the degree of achievement of the individual prescribed values and hence of the targets is automatically determined and an incentive payment dependent thereon is calculated and distributed, comprising a calculation module in which the definition of the assessment scale for determining the degree of achievement of the values is laid down, and a remuneration module in which the incentive payment belonging to an assessment resulting from the assessment module is laid down, further comprising an interface (60) to a performance objective management computer system (50, 52, 54) in which the target values for the performance target are managed, target values forming the basis for a comparison of target and actual values to be carried out in the target agreement computer system (10) being imported via the interface (60).

2. A process according to claim 1, further comprising a segment allocation module in which the definition of the responsibilities of the party to the agreement is laid down.

3. A process according to claim 1 or 2, wherein the interface (60) is constructed by means of an object type category connection or link.

4. A process according to claim 3, wherein the object type category comprises obtaining a target value (102), determining the actual value (104), displaying the target agreements (106), modifying the target agreements (108) and obtaining the remuneration base value (110).

5. A process according to claim 4, wherein obtaining the target value (102) involves obtaining and providing the target values of the target agreements based on a specific time span and a specific commissions contract (target agreement).

6. A process according to claim 4 or 5, wherein obtaining the actual value (104) involves obtaining and providing the actual values achieved in connection with a target agreement based on a specific time span and a specific commissions contract.

7. A process according to any one of the claims 4 to 6, wherein displaying the target agreements (106) involves displaying the target agreements in relation to a specific time span in the commissions contract.

8. A process according to any one of the claims 4 to 7, wherein modifying the target agreements (108) involves modifying the target agreements in relation to a specific time span in the commissions contract.

9. A process according to any one of the claims 4 to 8, wherein obtaining the remuneration base value (110) involves inputting the remuneration base value, which can vary for different target agreements, into the calculation module.

10. A process according to any one of the claims 1 to 9, wherein standard target agreements (26) are laid down in the target agreement system 10, 22), on the basis of which individual target agreements (72) can be produced, and wherein the personnel management system (50) contains electronic forms (62) on the basis of which party-specific documents (74) can be generated.

11. A process according to claim 10, wherein, upon creation of a target agreement with a party to the agreement, an allocation is generated in the form of a link between the party-specific document (74) and the target agreement (72).

12. A process according to claim 11, wherein the performance target data is attended to via a dialogue device (18).

13. A target agreement computer system (10) for the computer-implemented management of one or more target agreements (72) with one or more parties to the agreement, wherein the target agreements (72) each comprise at least one performance target, a performance target being a measurable value to be achieved within a given or predeterminable time span, where at the start of the time span a target agreement is defined and at the end of the time span the degree of achievement of the values and hence of the target is automatically determined and an incentive payment dependent thereon is calculated and distributed, comprising a calculation module in which the definition of the assessment scale for determining the degree of achievement of the prescribed values is laid down, and a remuneration module in which the incentive payment belonging to an assessment resulting from the assessment module is laid down, further comprising an interface (60) to a performance objective management computer system (50, 52, 54) in which the target values for the performance target are managed and target values for a comparison of target and actual values to be carried out in the target agreement computer system (10) are imported via the interface (60).

14. A system according to claim 13, further comprising a segment allocation module in which the definition of the responsibilities of the party to the agreement is laid down.

15. A system according to claim 13 or 14, wherein the interface (60) is constructed by means of an object type category connection or link.

16. A system according to claim 15, wherein the object type category comprises the following methods: obtaining a target value (102), determining the actual value (104), displaying the target agreements (106), modifying the target agreements (108) and obtaining the remuneration base value (110).

17. A system according to claim 16, wherein the method of obtaining the target value (102) involves obtaining and providing the target values of the target agreements based on a specific time span and a specific commissions contract (target agreement).

18. A system according to claim 16 or 17, wherein the method of obtaining the actual value (104) involves obtaining and providing the actual values achieved in connection with a target agreement based on a specific time span and a specific commissions contract.

19. A system according to any one of the claims 16 to 18, wherein the method of displaying the target agreements (106) involves displaying the target agreements in relation to a specific time span in the commissions contract.

20. A system according to any one of the claims 16 to 19, wherein the method of modifying the target agreements (108) involves modifying the target agreements in relation to a specific time span in the commissions contract.

21. A system according to any one of the claims 16 to 20, wherein the method of obtaining the remuneration base value (110) involves inputting the remuneration base value, which can vary for different target agreements, into the calculation module.

22. A system according to any one of the claims 13 to 21, wherein standard target agreements (26) are laid down in the target agreement system (10, 22), on the basis of which individual target agreements (72) can be generated, and wherein the personnel management system (50) contains electronic forms (62) on the basis of which party-specific documents (74) can be generated.

23. A system according to claim 22, wherein, upon creation of a target agreement with a party to the agreement, an allocation is generated in the form of a link between the party-specific document (74) and the target agreement (72).

24. A system according to claim 23, further comprising a dialogue device (18) configured to be used to attend to the performance target data.

25. A system according to any one of the claims 13 to 24, which determines at any given time the current degree of achievement for a given target agreement.

26. A system according to any one of the claims 13 to 25, which determines at any given time the historical development of the degree of achievement.

27. A system according to claim 25 or 26, which extrapolates the expected further development of the degree of achievement as well as according assessments and remunerations.

28. A computer program product with a computer-readable medium and a computer program stored on the computer-readable medium with program coding means which are suitable for carrying out a process according to any one of claims 1 to 12 when the computer program is run on a computer.

29. A computer program with program coding means which are suitable for carrying out a process according to any one of claims 1 to 12 when the computer program is run on a computer.

30. A computer-readable medium with a computer program stored thereon, the computer program comprising program coding means which are suitable for carrying out a process according to any one of claims 1 to 12 when the computer program is run on a computer.
